Europäisches Patentamt

European Patent Office

Office européen des brevets

(11) Publication number: **0 254 365 B1**

# EUROPEAN PATENT SPECIFICATION

(45) Date of publication of patent specification: **30.09.92**  (51) Int. Cl.⁵: **B29C 49/24**

(21) Application number: **87201361.0**

(22) Date of filing: **16.07.87**

(54) **Thermoplastic in-mold labeling label structure for deformable thermoplastic packages.**

(30) Priority: **23.07.86 US 889031**
**08.07.87 US 67771**

(43) Date of publication of application:
**27.01.88 Bulletin 88/04**

(45) Publication of the grant of the patent:
**30.09.92 Bulletin 92/40**

(84) Designated Contracting States:
**AT BE CH DE ES FR GB IT LI LU NL**

(56) References cited:
**US-A- 4 359 314**
**US-A- 4 585 679**

(73) Proprietor: **THE PROCTER & GAMBLE COMPANY**
**One Procter & Gamble Plaza**
**Cincinnati Ohio 45202(US)**

(72) Inventor: **Dornbusch, Arthur Harold**
**2931 Montana Avenue**
**Cincinnati Ohio 45211(US)**
Inventor: **Schanzle, Roger Evan**
**7708 Westwind Lane**
**Cincinnati Ohio 45242(US)**
Inventor: **Brazier, Irvin Lee**
**1319 South 45th Street**
**West Milwaukee Wisconsin 53214(US)**

(74) Representative: **Suslic, Lydia et al**
**Procter & Gamble European Technical Center N.V. Temselaan 100**
**B-1853 Strombeek-Bever(BE)**

# Description

## TECHNICAL FIELD

This invention relates to in-mold labeling label structures for thermoplastic packages, and, more particularly, to a multilayer thermoplastic in-mold labeling label structure for deformable thermoplastic packages.

## BACKGROUND ART

Over the years, many label structures have been used and attached to various cartons, packages and the like. In this regard, different label structures have been utilized to conform with various needs and packaging requirements. An example of a somewhat specialized label structure is shown in US-A-4,264,657, which issued to H. B. Tollette on April 28, 1981. In particular, the Tollette structure included a foam layer, an intermediate printed layer, and a clear plastic film top layer. The foam layer of the Tollette label was designed to serve as a cushion to protect the labeled container from shocks and impacts experienced during shipping and handling, and the outer printed layer was to comprise a printed paper layer. The Tollette label structure was contemplated for use on glass containers which commonly were to be subjected to glass-to-glass packaging.

Another label structure designed for a particular and somewhat specialized application is shown in US-A-4,528,055, which issued to J. C. Hattemer on July 9, 1985. In particular, the Hattemer patent concerns a label which can include a removable central coupon area which is detachable from the balance of the label and serves as a redemption, discount or promotional coupon for the product. The Hattemer label includes a pressure-sensitive paper base sheet, a paper top sheet, and a clear barrier sheet therebetween. These three layers are laminated together such that the top sheet can be removed while the clear barrier sheet remains attached to the base layer. The barrier layer prevents ink and other graphic printing from the top sheet to transfer to the base sheet.

Another multilayered label structure is shown in US-A-4,581,262, which issued to J. A. Karabedian on April 8, 1986. The Karabedian sleeve label is a coextruded multilayer sheet comprising a lower foam layer to be situated on the inside of the sleeve next to the container, and an outside printable solid skin layer made of a blend of high density polyethylene, block copolymer of styrene and butadiene, and polystyrene. Similarly, the brittle foam layer is to be a polystyrene material, and the foam and skin layers are bonded together such that the sheer bond strength therebetween is less than the yield strength of the tough outer skin, whereby when sheer stress is applied to the label laminate, the foam layer tears slightly away from the skin layer and the skin resists tearing. The label is contemplated to be heat shrunk onto the outside of a container and attached to such container only at limited points to facilitate easy removal of such label for recycling of the container. A similar label structure including the brittle foam layer and the outer tough skin is illustrated in US-A-4,567,681, which issued to G. J. Fumel on February 4, 1986. The Fumel plastic label includes a polystyrene foam layer which provides a solvent-soluble label portion whereby the plastic label can be wrapped around the container and attached to itself and the container only at predetermined finite areas. This limited attachment enables the easy removal of the label for recycling of the container.

Paper and paper-like labels have also been used in the in-mold labeling context in the formation of blow-molded containers. In this regard, it has been found that it is advantageous to place the paper label within the blow-molding mold prior to the expansion of a heated preform, whereby the paper label is integrally attached to the outer surface of the blow-molded container during such blow-molding procedures. An example of a transfer device for applying labels to blow-molds is shown in US-A-4,359,314, which issued to E. W. Hellmer on November 16, 1982. As explained in the Hellmer patent, the transfer device picks up a label from a stack of labels and moves the label into alignment with a pre-selected portion of the inner surfaces of a female mold cavity prior to blow-molding. Thereafter, a container preform is blown against the inner walls of the closed mold cavity and the label is adhered to the outer surface of such stretched pre-form.

While in-mold labeling procedures, such as described in the Hellmer reference, have certainly helped improve the economics, performance and appearance of labels on blow-molded thermoplastic containers, it has been found that conventional label stock materials often wrinkle, delaminate, or otherwise deteriorate under the thermal and mechanical stresses imposed thereon by the in-mold labeling procedures. In particular, the high heat inherent in in-mold labeling, and the subsequent shrinkage of the blow-molded thermoplastic material as it cools impose relatively severe stresses upon conventional label stock material, often causing the label to wrinkle, bubble, delaminate from the container and/or other layers of the label, or otherwise experience deterioration in its graphics or general appearance. Such deterioration and poor performance can become especially acute if the container is exposed to squeezing and/or a moist or wet environment. Despite the growing use of in-mold labeling in the industry, there remain problems in maintaining a smooth label surface and in maintaining the bonds of lamination between the label and the container and the various label laminated layers. Prior art label stock did not adequately provide solutions to these problems.

## DISCLOSURE OF THE INVENTION

It is an object of this invention to obviate the above-described problems.

It is another object of the present invention to provide a flexible multilayer label adapted for application to deformable thermoplastic packages via in-mold labeling procedures.

It is yet another object of the present invention to provide a flexible multilayer label for application to deformable thermoplastic packages via in-mold labeling procedures, wherein such label is impervious to water and sufficiently resilient to avoid permanent deformation (e.g. wrinkling, cracking, delamination, etc.) upon deflection.

It is also an object of the present invention to provide a flexible multilayer label which can be conveniently applied to deformable thermoplastic packages via in-mold labeling procedures, wherein the flexible label includes a stress-compensating stratum which accommodates the thermal stresses and package shrinkage inherent in such in-mold labeling procedures, as well as stresses imposed by deformation of the package in use, such that the outer label surface remains substantially smooth.

In accordance with one aspect of the present invention, there is provided a non-paper flexible multilayer label adapted for application to deformable thermoplastic packages via in-mold labeling procedures. The label is impervious to water and sufficiently resilient to avoid permanent deformation upon deflection, and includes a thermoplastic stress-compensating stratum and a thermoplastic label stratum which has a Young's Modulus greater than about 689 407,5 kPa and a smooth label surface. The lower surface of the stress-compensating stratum is adapted to be bonded to the outer surface of the thermoplastic package during in-mold labeling procedures and the label stratum is laminated to the upper surface of the stress-compensating stratum. The stress-compensating stratum comprises a machineable, elastic structure which accommodates the thermal stresses and package shrinkage inherent in such in-mold labeling procedures, as well as stresses imposed by deformation of the package in use such that the label surface of the label stratum is effectively isolated from such stresses and shrinkage and remains substantially smooth, and the laminated bonds between the label stratum, the stress-compensating stratum, and the deformable package remains substantially intact.

## BRIEF DESCRIPTION OF THE DRAWINGS

While the specification concludes with claims particularly pointing out and distinctly claiming the present invention, it is believed that the same will be better understood from the following description taken in conjunction with the accompanying drawings in which:

Figure 1 is an enlarged partial cross-sectional view of a flexible multilayer label structure made in accordance with the present invention;

Figure 2 is an enlarged partial cross-sectional view of an alternate embodiment of a flexible multilayer label structure made in accordance with the present invention;

Figure 3 is a partial cross-sectional view of a female blow-mold cavity shown prior to the blow-molding procedure and having a flexible multilayer label structure placed against its inner surfaces;

Figure 4 is a cross-sectional view of the female blow-molding cavity of Figure 3 subsequent to the expansion of a heated thermoplastic preform against the inner surfaces thereof and against the flexible multilayer label structure held therewithin;

Figure 5 is an enlarged partial cross-sectional view of a portion A of Figure 4 illustrating a portion of the resulting blow-molded container wall including the flexible multilayer label structure after in-mold labeling procedures.

## DETAILED DESCRIPTION OF THE INVENTION

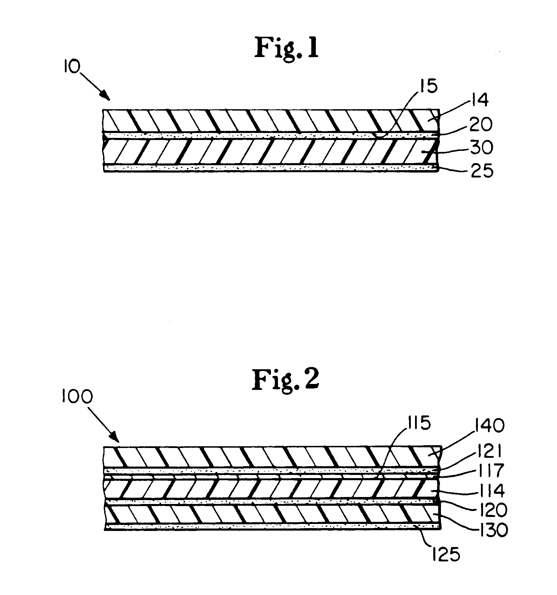

Referring now to the drawings in detail, wherein like numerals indicate the same elements throughout the views, a flexible multilayer non-paper label 10 is shown in Figure 1 as comprising a stress-compensating stratum 30, a thermoplastic label stratum 14, and means 20 for laminating label stratum 14 to the upper surface of stress-compensating stratum 30. Stress-compensating stratum 30 further includes a lower surface 25 adapted to be bonded to the outer surface of a thermoplastic package during in-mold labeling procedures.

Stress-compensating stratum 30 can be formed from a wide range of thermoplastic materials (e.g. polyethylene or polypropylene) as long as such stratum features an overall structure having relatively elastic characteristics such that (as will be described in greater detail below) the thermal stresses, post-mold shrinkage of the blown thermoplastic package, and various mechanical stresses imposed by deformation of the package in use can be accommodated by such stratum without damaging the label stratum laminated thereto. In this regard, it has been found that conventional single-layer and multilayer film label structures become wrinkled, cracked, creased, or delaminated due to degradation of the label material and/or the bonds between the individual label layers and/or the thermoplastic container when subjected to the inherent thermal stresses imposed by in-mold labeling procedures, and due to shrinkage of the blow-molded package beneath the label attached thereto as the package cools following such blow-molding procedures. In addition, similar degradation results during normal use of a labeled thermoplastic package when subjected to repeated squeeze-type dispensing operations, and when such package is exposed to a wet environment (e.g. a shower or bath environment).

In order to obviate these negative performance characteristics of standard label structures, it has been found that, among other things, the label structure must be flexible and sufficiently resilient to avoid permanent deformation (e.g. wrinkling, creasing, cracking, etc.) upon deflection of the label support surface. It has been found that a stress-compensating stratum (e.g. 30) having relatively elastic integrity can be advantageously employed to effectively isolate a label stratum (e.g. label stratum 14) from such stresses and shrinkage. In particular, the structure of the stress-compensating stratum must be elastic enough to readily distort in response to thermal and mechanical stresses without transferring such stresses and/or distortion to other label layers laminated thereto. In this way, the stress-compensating stratum "accommodates" such thermal and mechanical stresses by dispersing the same within such elastic stratum, effectively "absorbing" the stresses and isolating the balance of the label structure therefrom.

It has further been found that such stress-compensating stratum can be pliable, adaptable structure such as one or more layers of EVA-polyethylene film or similar unfoamed thermoplastic film material. These materials should be machine handleable and have a Modulus of Elasticity (Young's Modulus) of less than about 176 520 kPa according to ASTM test method D882. EVA-polyethylene is a copolymer of ethylene and vinyl acetate, ranging from about 1% to about 12% by weight vinyl acetate. For present purposes, a range of about 3% to about 6% is preferred. Examples of these structures are described more fully below, however, the critical requirement of the stress-compensating stratum is that it must be sufficiently elastic to accommodate the described stresses without transferring the same to other label layers. As used herein, the term "accommodate" shall be used to connote the idea that the stress-compensating stratum disperses or absorbs such stresses without transmitting the same to other strata or layers of the label.

Figure 1 illustrates an embodiment of a flexible multilayer label 10 including such a stress-compensating stratum 30. In particular, stress compensating stratum 30 can be a relatively thin (e.g. from about .025 mm (.001 inches) to about .076 mm (.003 inches), preferably about .032 mm (.00125 inches) to about .044 mm (.00175 inches) in thickness) EVA-polyethylene film layer, nominally about 3% by weight vinyl acetate, having a low temperature-activated sealent laminated to its inner surface 25 to provide the required capability of bonding stratum 30 to the outer surface of a thermoplastic package during in-mold labeling procedures. The stress compensating stratum described can be obtained from Deerfield Plastics Co., Deerfield, MA, identified as Grade 915 EVA. The low temperature sealant (hereinafter referred to as "LTS") is preferably an ethylene-vinyl acetate copolymer such as described in US-A-3,573,125, which issued to B. W. Elliot on March 30, 1971, the disclosure of such patent being hereby incorporated herein by reference. Such ethylene-vinyl acetate copolymer LTS can be obtained from Milprint, Inc., Milwaukee, Wisconsin. Other means for providing the bonding capabilities of the lower surface of stress-compensating stratum 30 to the outer surface of a thermoplastic package, such as a layer of low density polyethylene or the like, could be substituted for the described LTS layer; however, the ethylene-vinylacetate (EVA) copolymer LTS is preferred for its exceptionally good flow characteristics, good latitude with respect to temperature differentials during the in-mold container forming process, and its superior general versatility vis-a-vis alternative bonding materials.

Thermoplastic label stratum 14 is laminated to the upper surface of stress-compensating stratum 30. It should be noted that the term "laminated" is used herein to connote any means of bonding two surfaces together, whether by adhesives, co-extrusion, etc. Means 20 for laminating these two strata preferably comprises a standard adhesive commonly available in the industry, such as an epoxy- type urethane (e.g. as available under the trade name Lamal or Adcote, both from the Morton Thiokol Company). The exact choice of means for laminating label stratum 14 to stress-compensating stratum 30 would, of course, depend upon the materials chosen for such strata in a particular structure.

The label stratum 14 can be any thermoplastic which has a smooth surface, is resistant to heat shrinkage on brief exposure to temperatures up to about 205°C (400°F) provides a good bonding surface for metalizing and has a Young's Modulus higher than about 689 407,5 kPa (100,000 psi). Examples of suitable materials are polyethylene terephthalate (PET) film, polystyrene film and cast polypropylene film.

As discussed, label stratum 14 is to have a smooth label surface. In Figure 1, smooth label surface 15 is shown as being located on the inner surface of label stratum 14. Although it may be preferred to locate the smooth label surface on the interior of label stratum 14 for protection of printed graphics and the like, such smooth label surface could equally be located on the outer side of label stratum 14. As will be seen below, where it is desirable to more effectively isolate label surface 15 from the described thermal stresses and mechanical stresses encountered in shrinkage and deformation of the package walls, it may often be preferred that smooth label surface 15 be located on the outer face of label stratum 14.

As will also be described in greater detail below, flexible multilayer label 10 is designed to be placed within a female blow-mold cavity with lower surface 25 of stress-compensating stratum 30 being oriented toward the interior of such cavity. A heated thermoplastic parison is then blow-molded against multi-layer label 10 and the interior walls of such female mold cavity during blow-molding procedures, and lower surface 25 of stress-compensating stratum 30 is thereby bonded to the outer surface of the expanded thermoplastic material by interaction of the LTS and the heated parison.

An alternate embodiment of a non-paper flexible multilayer label made in accordance with the subject invention is shown in Figure 2. In particular, label 100 includes a thermoplastic stress-compensating stratum 130 having a lower surface 125 adapted to be bonded to the outer surface of a thermoplastic package during in-mold labeling procedures, as described with regard to label 10 above. In this regard, it is contemplated that lower surface 125 might comprise an EVA copolymer LTS, as described above, laminated to the lower surface of a EVA-polyethylene film stress-compensating stratum 130. Similarly, label 100 includes a thermoplastic label stratum 114 and means for laminating label stratum 114 to the upper surface of stress-compensating stratum 130. Additionally, label 100 includes a thermoplastic outer or protective layer 140.

Often it is desired to include special ornamental label effects, such as printed and metallic portions, to enhance the overall and decorative appearance of a label. Figure 2 illustrates a flexible multilayer label 100 wherein the upper surface 115 of label stratum 114 has been metalized (e.g. stratum 114 may be film which has a very thin layer 117 of metal particles deposited on its upper surface - such as by the commonly known vacuum metalizing process). In order to achieve good bonding characteristics of metalized surface 115 to label 100, it is preferred that label stratum 114 comprise a polyethylene terephthalate or PET film (a polyester film commonly available from the E.I. DuPont Company) to provide a superior bonding surface for such metalized material. As was the case with label 10 above, it is contemplated that label stratum 114 be laminated to the upper surface of stress-compensating stratum 130 by a standard adhesive layer 120, such as the epoxy-type urethane mentioned above. Similarly, a protective layer 140 such as a polyethylene film is preferably laminated to the upper surface of metalized surface 115 by a second layer of epoxy-type urethane adhesive 121. Again, exact choice of means to laminate the individual layers of the label structure to one another should be chosen in accordance with the specific material of such layers and to insure compatibility with in-mold labeling requirements. For example, if EVA-polyethylene material were used for stress-compensating stratum 130, a superior lamination bond between such EVA-polyethylene and the PET of label stratum 114 would preferably be accomplished by the use of a high-heat resistant adhesive such as a polyurethane retort adhesive (as commonly available from the Morton Thiokol Company under the trade name Adcote 506 or 102a) at bonding layer 120, as opposed to the epoxy-type urethane described above. On the other hand, the Lamal or Adcote adhesive noted above would be adequate for adhesive layer 121 between a printed polyethylene protective layer 140 and the metalized PET label stratum 114. The Lamal adhesive would be particularly preferred for adhesive layer 121 if the upper surface of label stratum 114 or the lower surface of protective layer 140 were printed with inks, as Lamal adhesive is known to chemically react with inks to create a relatively strong bond.

Whenever a metalized surface is incorporated into a laminate structure, such as shown and described with regard to labels 100 in Figure 2, if it is desired to maintain a smooth shiny appearance, it is critical that such metallic surface be protected from the thermal and mechanical stresses imposed by the in-mold labeling process and the inherent subsequent shrinkage of the blown thermoplastic material as cooling takes place. In this regard, it is known that heat can distort the metallic surface and degrade the adhesion of such metal to thermoplastic surfaces. Because such metal adhesion is inherently weak anyway, it is critical that a flexible label include structure to effectively isolate the metallic layer from such heat and related stresses. Therefore, like the smooth surface of the thermoplastic label stratum to which it is attached, it is preferred that the metalized surface be located as remotely as practicable from such stresses. In this regard, it has been found that to minimize the potential harmful effects concomitant with in-mold labeling procedures, the metalized layer 117 is preferably located on smooth upper surface 115 of label stratum 114. This is true because the closer a metallic layer is to the source of heat (i.e. the heated thermoplastic parison which is blown against the low temperature sealant laminated to the lower surface 1035 of the stress-compensating stratum 130), the more such metal material acts as a heat sink. The more heat absorbed by the metallic layer, the less adhesion it will have to adjacent thermoplastic layers. In addition, such heat tends to distort metallic surfaces, further degrading appearance and adhesion to adjacent thermoplastic surfaces. Therefore, it is critical to effectively isolate the metalized layer 117 and the smooth label surface 115 of label stratum 114 from these thermal stresses and the related stresses caused by shrinkage of the thermoplastic package as it cools following blow-molding procedures.

When metalized surfaces are to be included in the label, it is preferred that label stratum 114 be formed of PET film, as PET is well known for its strong bonding capabilities with metallic surfaces (i.e. vacuum metalized film). It is also preferred that materials which are substantially impervious to water and moisture be used for each of the label strata and layers described herein, as materials affected by humidity and moisture can allow delamination of label stratum when exposed to a wet or moist environment.

Because blow-molded packages are often deformable in use, it is also very important that a flexible multilayer label be sufficiently resilient to avoid permanent deformation (i.e. wrinkling, cracking, creasing, etc.) upon deflection when mounted on the bottle support surface. The relatively thin thermoplastic and metallic materials described above with regard to the various label strata and layers provide such resilience, and are also impervious to water.

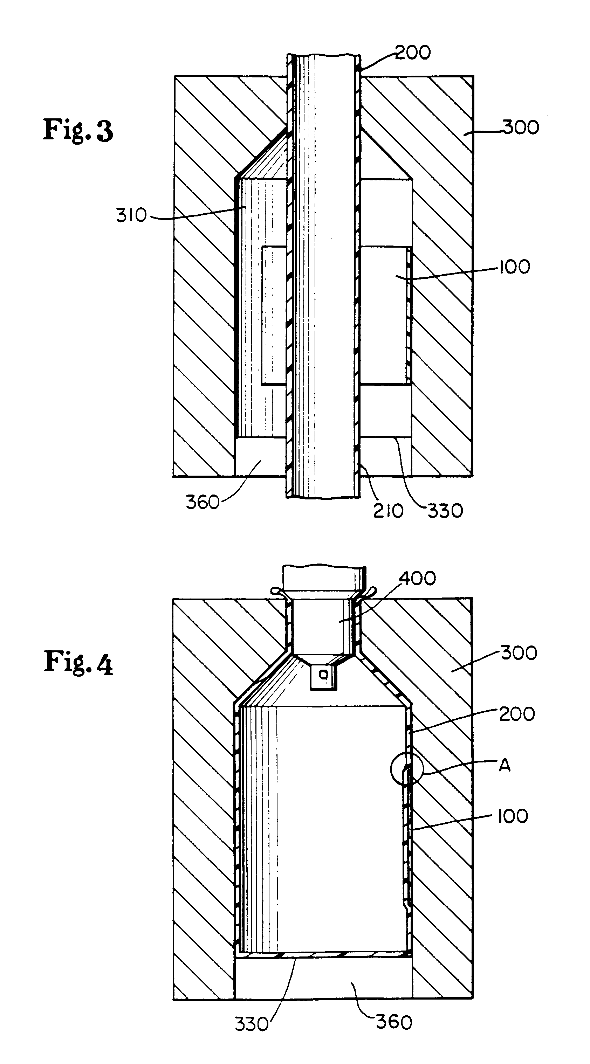

Figure 3 shows a cross-sectional view of a female blow-molding mold unit after a flexible multilayer label (e.g. label 100) has been placed therewithin. Such label might be placed in the open half of a female mold unit by any of a number of methods known in the industry for placing label stock in blow-molding molds prior to in-mold labeling procedures. As shown in Figure 3, the mold half 300 includes a female mold cavity 310 establishing the shape of a thermoplastic package to be blow-molded therewithin. Label 100 is held within female mold cavity 310 by methods commonly known in the industry, such as by a small vacuum ports (not shown) formed within the cavity 310. Following placement of label 100 within cavity 310, opposite sides of the female mold unit 300 would be closed about an extruded parison 200. When the opposite halves of female mold unit 300 are closed, the lower portion of parison 200 is pinched between corresponding pinch edges 330 in the lower portion of mold unit 300. This pinching action serves to close off the lower end of heated tubular parison 200 to permit formation of the bottom portion of the bottle during blow-molding procedures. Beneath the pinch edges 330 of mold sections 300 are undercut areas 360 which allow excess thermoplastic material 210 to be pinched off from tubular parison 200 without interfering with the complete closure of mold cavity 300. This excess thermoplastic material 210 may be removed by mechanical jaws (not shown) or other similar removal means known in the industry. As illustrated in Figure 4, the upper portion of the mold unit 300 would then be sealed, such as by the blow-molding plug 400, prior to the expansion of heated parison 200 against the inner surfaces of female mold cavity 310. Thermoplastic parison 200 would, of course, be heated to above its melting point (e.g. between about 193°C and about 204°C, (or between about 380°F and about 400°F) for a high density polyethylene) for extrusion prior to blow-molding. As parison 200 is expanded against the inner surfaces of female mold cavity 310 by a sufficient pneumatic or fluid pressure differential (e.g. supplied via blow-molding plug 400), the heated thermoplastic material contacts and is formed around label 100 held therewithin. Because lower surface 125 is to be oriented inwardly, the low temperature sealant comprising lower surface 125 bonds the multilayer label 100 to the outer surface of the heated thermoplastic parison 200. The expanded thermoplastic material is then cooled, thereby assuming the shape of female mold cavity 310.

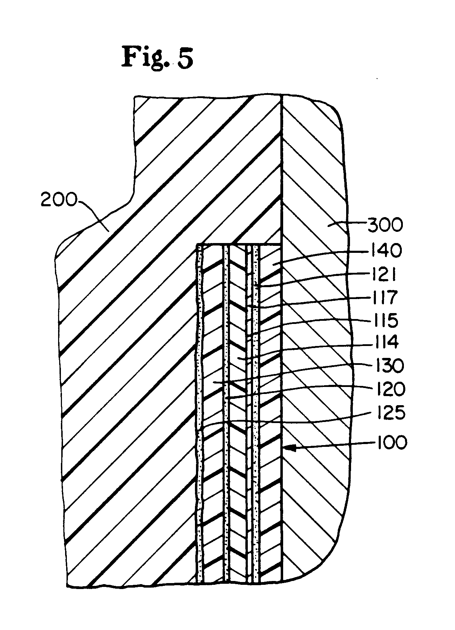

Figure 5 is a greatly enlarged partial cross-sectional view of the area A (Figure 4) of the in-mold labeled thermoplastic package formed from parison 200 and label 100, illustrating a portion of the thermoplatic package wall including label 100. As shown in Figure 5, label 100 is bonded to the outer surfaces of the resulting thermoplastic package and is integrated into its external wall surfaces as a result of the in-mold labeling process. During the cooling process, it is a common phenomenon for thermoplastic material to shrink. As seen in Figure 5, such shrinkage causes some local distortion in the thickness of stress-compensating stratum 130 as a result of its elastic structure. However, such elastic structure does not tend to transfer such local stresses to the label stratum 114 laminated to its upper surface. In this way, stress-compensating stratum 130 serves to accommodate or disperse the various mechanical stresses imposed on label 100 by such shrinkage. Additionally, during the in-mold forming procedure, stress-compensating stratum 130 tends to dissipate or effectively absorb the heat of the heated parison 200, thereby effectively isolating the smooth surface 115 and the metallic layer 117 from such thermal stresses. Protective layer 140 serves to protect the metalized layer 117 of label stratum 114, as well as other graphics and inks printed on metalized layer 117, label surface 115 and/or the inner surface of protective layer 140. Consequently, the unique structure of the flexible multilayer label of the subject invention makes it possible to provide a labeled deformable thermoplastic package having an in-mold film labeled label featuring superior appearance, tactile impression, and durability.

An example of a preferred label 100 is prepared by laminating a thermoplastic stress-compensating stratum 130 made of EVA copolymer polyethylene to a lower layer 125 of low temperature sealant (LTS), as described above. Such stress-compensating stratum 130 preferably has a thickness of approximately about .032 mm (.00125 inches) and the LTS is preferably coextruded with the stress-compensating stratum at a thickness of about .025 mm (.001 inches). A layer 120 of epoxy-type urethane adhesive is preferably utilized to laminate a label stratum 114 made of PET material to the upper surface of the stress-compensating stratum 130. Preferably the PET material is approximately 48 gauge and is metalized as desired, with the metalized surface 117 of the label stratum 114 being oriented on the outer face (smooth surface 115) thereof. To protect the metalized label stratum 114, it is preferred that an outer or protective layer 140 of polyethylene film be laminated to the upper surface of label stratum 114. This lamination could preferably be accomplished by the use of an epoxy-type urethane adhesive layer 121 as described above, and such protective layer 140 preferably is polyethylene film having an approximate thickness of about .032 mm, (.00125 inches). As mentioned above, the inner surface of protective layer 140 could also be printed as desired.

Additional details of the blow-molding procedures for forming thermoplastic packages incorporating the subject labeling structure are not included herein, as such procedures can be undertaken in a variety of ways known in the industry. In this regard, blow-molding temperatures and pressures similar to those set forth in commonly assigned US-A-4,578,028, which issued to William P. Dirksing et al. on March 25, 1986 can be utilized; the disclosure of such patent being hereby incorporated herein by reference.

As mentioned above, the exact structure of the subject multilayer label can be adjusted as desired in accordance with specific needs and applications. For example, it has been illustrated that the stress-compensating stratum of the subject label can be any of a variety of thermoplastic materials, featuring relatively elastic structures which can accommodate thermal and mechanical stresses without transferring such stresses to other label strata laminated thereto. In this regard, the stress-compensating stratum could be a combination of several different layers of thermoplastic materials laminated together. In addition, it has been shown that protective layers can be laminated above the label stratum as desired. Such protective layers might equally be omitted and/or substituted by a thin layer of varnish or the like, as appropriate. Having shown and described the preferred embodiment of the present invention, further adaptions of the label structure can be accomplished by appropriate modifications by one of ordinary skill in the art without departing from the scope of the following claims.

## Claims

1. A non-paper, flexible, multilayer label (10,100) which is to be applied to deformable thermoplastic packages via in-mold labeling procedures, said label being impervious to water and sufficiently resilient to avoid permanent deformation upon deflection, said label comprising :

(a) a thermoplastic stress-compensating stratum (30,130) of unfoamed film having a Young's Modulus of less than 176.520 kPa, having an upper and a lower surface, said lower surface (25,125) consisting of a low temperature activated sealant to be bonded to the outer surface of the thermoplastic package during in-mold labeling procedures; and

(b) a thermoplastic label stratum (14,114) which has a Young's Modulus greater than about 689.407,5 kPa and a smooth label surface and which is laminated to the upper surface or said stress-compensating stratum (30,130);

(c) wherein said stress-compensating stratum (30,130) comprises a machineable, elastic structure.

2. The label of claim 1 characterized in that said thermoplastic label stratum (14,114) is a polyester film.

3. The label of claim 2 characterized in that said thermoplastic label stratum (14,114) is made of polyethylene terephthalate.

4. The label of any of the preceeding claims characterized in that said thermoplastic label stratum (14,114) includes a metalized surface (117) for enhanced decorative appearance.

5. The label of any of the preceeding claims characterized in that said stress-compensating stratum (30,130) is made of a copolymer of ethylene-vinyl acetate and low density polyethylene.

6. The label of claim 5 characterized in that said stress-compensating stratum (30,130) has between about 3% to about 6% by weight ethylene-vinyl acetate.

7. The label of any one of claims 1-4 characterized in that said stress-compensating stratum (30,130) is selected from EVA-polyethylene having a skin laminated to its upper and lower surfaces.

8. The label of any one of claims 5-7 characterized in that the thermoplastic label stratum (14,114) is made of polyethylene terephthalate.

**Patentansprüche**

1. Papierloses, flexibles, mehrlagiges Etikett (10, 100), welches auf verformbare thermoplastische Verpackungen über einen Etikettiervorgang in einer Form aufbringbar ist, wobei das Etikett wasserundurchlässig und ausreichend elastisch ist, um eine permanente Verformung bei Biegung zu vermeiden, wobei das Etikett aufweist:
(a) eine thermoplastische spannungskompensierende Schicht (30, 130) aus einem ungeschäumten Film, der einen Young-Modul von weniger als 176.520 kPa hat, mit einer Oberseite und einer Unterseite, wobei die Unterseite (25, 125) aus einem niedrigtemperaturaktivierbaren Dichtungsmittel besteht, das mit der Außenseite der thermoplastischen Verpackung während Etikettiervorgängen in der Form verbindbar ist; und
(b) eine thermoplastische Etikettenschicht (14, 114), die einen Young-Modul von größer als etwa 689.407,5 kPa und eine glatte Etikettenfläche hat, und welche auf die Oberseite der spannungskompensierenden Schicht (30, 130) laminiert wird;
(c) wobei die spannungskompensierende Schicht (30, 130) eine maschinenverarbeitbare elastische Struktur hat.

2. Etikett nach Anspruch 1, dadurch gekennzeichnet, daß die thermoplastische Etikettenschicht (14, 114) ein Polyesterfilm ist.

3. Etikett nach Anspruch 2, dadurch gekennzeichnet, daß die thermoplastische Etikettenschicht (14, 114) aus Polyethylenterephthalat besteht.

4. Etikett nach einem der vorhergehenden Ansprüche, dadurch gekennzeichnet, daß die thermoplastische Etikettenschicht (14, 114) eine metallisierte Oberfläche (117) zur Verbesserung des dekorativen Aussehens aufweist.

5. Etikett nach einem der vorhergehenden Ansprüche, dadurch gekennzeichnet, daß die spannungskompensierende Schicht (30, 130) aus einem Copolymer von Ethylen-Vinylacetat und einem Polyethylen niedriger Dichte besteht.

6. Etikett nach Anspruch 5, dadurch gekennzeichnet, daß die spannungskompensierende Schicht (30, 130) zwischen etwa 3 % und etwa 6 Gew.-% Ethylen-Vinylacetat aufweist.

7. Etikett nach einem der Ansprüche 1 bis 4, dadurch gekennzeichnet, daß die spannungskompensierende Schicht (30, 130) aus EVA-Polyethylen gewählt ist, das eine auf seine Oberseite und Unterseite laminierte Haut aufweist.

8. Etikett nach einem der Ansprüche 5 bis 7, dadurch gekennzeichnet, daß die thermoplastische Etikettenschicht (14, 114) aus Polyethylenterephthalat besteht.

**Revendications**

1. Etiquette à couches multiples flexible sans papier (10, 100) qui doit être appliquée sur des emballages en matière thermoplastique déformables à l'aide de procédures d'étiquetage dans le moule, ladite étiquette étant imperméable à l'eau et suffisamment élastique pour éviter une déformation permanente lors d'une flexion, ladite étiquette comportant :
(a) une couche de compensation de contrainte en matière thermoplastique (30, 130) de film non transformé en mousse ayant un module de Young inférieur à 176520 kPa ayant une surface supérieure et une surface inférieure, ladite surface inférieure (25, 125) consistant en un matériau d'étanchéité activé à basse température devant être collé sur la surface extérieure de l'emballage en matière thermoplastique au cours de procédures d'étiquetage dans le moule; et
(b) une couche d'étiquette en matière thermoplastique (14, 114) qui a un module Young supérieur à environ 689407,5 kPa et une surface d'étiquette lisse et qui est stratifiée sur la surface supérieure de ladite couche de compensation de contrainte (30, 130);

(c) dans laquelle ladite couche de compensation de contrainte (30, 130) comporte une structure élastique pouvant être travaillée.

2. Etiquette selon la revendication 1, caractérisée en ce que ladite couche d'étiquette en matière thermoplastique (14, 114) est un film polyester.

3. Etiquette selon la revendication 2, caractérisée en ce que ladite couche d'étiquette en matière thermoplastique (14, 114) est réalisée en téréphtalate de polyéthylène.

4. Etiquette selon l'une quelconque des revendications précédentes, caractérisée en ce que ladite couche d'étiquette en matière thermoplastique (14, 114) comporte une surface métallisée (117) pour assurer un aspect décoratif amélioré.

5. Etiquette selon l'une quelconque des revendications précédentes, caractérisée en ce que ladite couche de compensation de contrainte (30, 130) est réalisée en copolymère d'éthylène-acétate de vinyle et de polyéthylène basse densité.

6. Etiquette selon la revendication 5, caractérisée en ce que ladite couche de compensation de contrainte (30, 130) comprend environ 3% à environ 6% en poids d'éthylène-acétate de vinyle.

7. Etiquette selon l'une quelconque des revendications 1 à 4, caractérisée en ce que ladite couche de compensation de contrainte (30, 130) est choisie dans du polyéthylène EVA ayant une peau stratifiée sur ses surfaces supérieure et inférieure.

8. Etiquette selon l'une quelconque des revendications 5 à 7, caractérisée en ce que la couche d'étiquette en matière thermoplastique (14, 114) est réalisée en téréphtalate de polyéthylène.

## Fig. 1

## Fig. 2

**Fig. 3**

**Fig. 4**

## Fig. 5